# EUROPEAN PATENT SPECIFICATION

(11) **EP 4 336 348 B1**
(45) Date of publication and mention of the grant of the patent: **30.04.2025**
(21) Application number: 23193055.3
(22) Date of filing: 23.08.2023
(51) Int. Cl.: G06F 8/51, G06F 8/34

(54) **ITERATIVE AND INTERACTIVE METHOD FOR CODE CONVERSION**
ITERATIVES UND INTERAKTIVES VERFAHREN ZUR KODEUMSETZUNG
PROCEDE ITERATIF ET INTERACTIF DE CONVERSION DE CODE

(30) Priority: 08.09.2022 US 202217940003
(43) Date of publication of application: 13.03.2024
(73) Proprietor: Neograms SARL, 67210 Obernai (FR)
(72) Inventor: VIRY, Patrick, 67210 Obernai (FR)
(74) Representative: Käck, Stefan

(56) References cited:
- CN-B- 107 861 728
- US-A1- 2018 357 055
- US-B2- 10 061 573

## Description

### TECHNICAL FIELD

This disclosure relates to code conversion. More specifically, this disclosure relates to automating the conversion or renovation of program source code.

### BACKGROUND

Software written in older or little-known programming languages becomes increasingly difficult to maintain and to evolve, for a variety of reasons. First, such software lacks talent availability and for this reason it can be difficult or even impossible to hire programmers knowledgeable in the legacy language. A second problem with this software is the lack of support, which increases the cost of maintenance and decreases code quality as compared to modern languages. Third, this software is incompatible with software written using modern technologies as most legacy languages are ill-suited for technologies used with web, graphics, and relational databases. Next, there is the problem of hardware obsolescence as some compilers for older languages exist only on a hardware platform that is not available anymore. Finally, licensing costs of the software written in legacy languages is high because mainframe technologies often command very high license prices.

As a consequence, many companies attempt to move their code base to modern programming languages or modern frameworks by rewriting part or all of their legacy source code. This rewriting process can be very risky. Typically, the core processes of a business are hard-coded in the legacy source code itself and developed over several decades, with little or no documentation. Making changes to this code can have catastrophic effects on the business operations if errors are introduced during the conversion process. Moreover, depending on the size of the code base, rewriting it can be very costly and time consuming. A common figure accepted in the industry is 150 lines of converted code per person per day, and typical code bases are measured in millions of lines of code. For these reasons, it is desirable to automate the conversion process as much as possible, with the support of a conversion tool.

Existing tools to automate the conversion process broadly come in two families: model-based tools and rule-based tools. The model-based tools, in a first step, analyze the legacy source code and build an abstract model, often in Unified Modeling Language (UML) format. Then, in a second step, they generate code from that model. A typical example is ATLAS Transformation Language (ATL). By definition, a model abstracts away many details of the legacy code; however, if one wants to preserve a strictly identical behavior, then all details are important and must be provided. Typical model-based tools only generate the skeleton of an application and let a user fill in the actual code, namely the bodies of functions. Users of model-based tools complain that this manual phase is the most time-consuming because a lot of time is spent on "filling holes" in the generated code.

The rule-based tools directly convert a legacy code into a target code without building an intermediate model. Rewrite rules identify and replace patterns in the legacy language with patterns in the target language, without building any intermediate structure. The rewrite rules can also take into account the context and the results of various analyses to generate an idiomatic target code. A typical example is the DMS^{®} Software Reengineering Toolkit.

There also exist many "ad-hoc tools" on the market that are designed for one specific application area by specialists of that area rather than by experts in programming languages and tend to convert code line-by-line without an understanding of the larger context. Most ad-hoc tools simply encode the legacy code in the target language, keeping all the idioms and quirks of the legacy language. A widely known example in the industry is the NACA open source project, said to produce JOBOL code, a pun that stands for Common Business-Oriented Language (COBOL) encoded in Java. As stated in the NACA documentation, "[t]he generated Java uses a Cobol-like syntax. It's as close as possible from original COBOL syntax, within of course the limits of the Java language. Generated code doesn't look like classical native java and is not object oriented from the application point of view." For instance, the COBOL declaration '05 DAY PIC 9(2)' is converted to Java as 'Var day = declare.level(5).pic9(2).valueZero().var();'. Such code is unsafe (as it bypasses Java typing) and non-idiomatic (it does not look like any what Java developer would write). This approach makes it difficult to understand and to maintain by developers of the target language, thus defeating the whole purpose of language conversion.

State-of-the-art tools all face the same issue: once a result has been obtained, it is difficult or sometimes even plainly impossible to change. However, there are two important scenarios where one would like to update an already existing result: 1) to improve the quality of conversion over time, namely properties of the generated code such as readability, performance, architectural choices, and so forth; and 2) to allow changes in the original code for maintenance purposes during the conversion process and incorporate these changes in the conversion result.

Model-based tools use templates to generate a code from a model. Models cannot keep track of all the fine details and typically focus on the application architecture, leaving behind the code itself. Thus, the model-based tools generate a skeleton with holes, and users must "fill the holes" manually. In this example taken from ATL, the tool generates a method definition and leaves it to the users to fill in the body of the method (the part to be provided by the user is identified by the two comments REGION and END REGION):

```
       // The model-based tool generates a skeleton. Users must fill in the 'holes',
       // identified here as the text area between REGION and END REGION.
       private string getName()
       {
       //PROTECTED REGION ID("GeneratedClass.getName")
       This part must be filled manually by users.
       //PROTECTED REGION END
       }
```

During the migration process, it is often required to modify the code generation templates. For instance, in the example above, one may want to change the modifier 'private' to 'public.' After this change, the code must be generated anew, as below:

```
       public string getName()
       {
       //PROTECTED REGION ID("GeneratedClass.getName")
       This part must be filled manually by users.
       //PROTECTED REGION END
       }
```

However, the question is what is going to happen to code already entered to fill the holes. Users do not want their work to be overwritten every time the code is generated. The solution adopted by all known model-based tools is based on "protected regions," "protected areas," "user code blocks," or "user regions." In all these approaches, the comments are inserted by the tool to identify the holes that must be filled, and users need to inspect the "generated" code and fill in the holes. A hole, or region, is 'protected,' which means that the text entered by users cannot be overwritten.

In the example above, each protected region is identified by a unique identification string, in this case the full name of the method. When the tool regenerates code from the model, it keeps track of the text inserted between REGION ID(...) and END REGION, and this text is inserted again whenever the tool generates a region with the same ID.

However, there are still numerous problems with protected regions that prevent iteration. First, a region with the same ID may not exist anymore after code generation (for instance, if the name of the generated method changes). It is unclear then where the user text should go. This is a common occurrence in a modernization project where templates are incrementally improved to fit with the target architecture and changing customer requests. Second, a rigorous process is required to persist text inserted in the holes and reinsert this text after each code generation. The generator has to analyze the previously generated code to extract handwritten code from protected regions and save it before a file is overwritten. Third, text that has been manually inserted into these edit areas is oblivious of changes in the generated code. For instance, if the name of a variable changes in the generated code, the user code in protected regions is not updated and is now referring to the wrong variable. Fourth, it is not possible to override generated code outside of designated regions. The only option is to modify the code generation templates. This means that even simple edits require a heavy process.

Rule-based tools generate a high-quality target code with a high level of detail; however, they leave little or no room for user interaction. Specifically, unlike model-based tools, there are no holes to be filled, and there is simply no way to make changes to the result and to protect these changes against overwriting. Any change to the generated code must be done inside the generator. It is possible to edit and modify the conversion rules and then run the conversion again. However, this requires a deep understanding of the tool and typically must be done by a dedicated language engineer supported by the tool vendor.

Systems and methods for computer language migration are disclosed, for example, in U.S. Patent Application Publication No. US 2018/0357055 A1. A legacy-to-container (L2C) system converts a computer program in a procedural programming language to an object-oriented programming language. The L2C system parses the procedural language to identify program variables and also program sub-elements, such as paragraphs in COBOL for example. The L2C system provides a user interface that allows the user to select which paragraphs should be converted into methods wherein the remaining non-selected paragraphs are to be converted into classes. The L2C system is configured to re-architect the procedural language by (i) creating normal object classes corresponding to the identified variables, (ii) creating methods for the user-selected paragraphs; and (iii) creating classes for the remaining non-selected paragraphs. The L2C system further includes various wizards to further facilitate the re-architecting, such as a UI enrichment wizard, a code elimination wizard, and a database optimizer wizard, as well as a code de-duplication wizard, a microservices wizard, and a parallel processing wizard.

### SUMMARY

This summary is provided to introduce a selection of concepts in a simplified form that are further described in the Detailed Description below. This summary is not intended to identify key features or essential features of the claimed subject matter, nor is it intended to be used as an aid in determining the scope of the claimed subject matter.

The invention is defined in the independent claims. Particular embodiments are set out in the dependent claims.

According to one aspect of the present disclosure, a method for code conversion is provided. The method may include receiving a source code of an application. The source code may be associated with a first programming language. The method may continue with processing the source code according to a conversion plan to generate an output code associated with a second programming language. The conversion plan may include one or more instructions for converting the source code to the output code. The method may continue with updating the conversion plan to obtain an updated conversion plan and processing the source code according to the updated conversion plan to generate an updated output code. The updated conversion plan may include one or more instructions for converting the source code to the output code.

According to another aspect of the present disclosure, a computing apparatus for code conversion is provided. The computing apparatus may include a processor and a memory storing instructions that, when executed by the processor, configure the computing apparatus to receive a source code of an application. The source code may be associated with a first programming language. The processor may be configured to process the source code according to a conversion plan to generate an output code associated with a second programming language. The conversion plan may include one or more instructions for converting the source code to the output code. The processor may be configured to update the conversion plan to obtain an updated conversion plan and process the source code according to the updated conversion plan to generate an updated output code. The updated conversion plan may include one or more updated instructions for converting the source code to the output code.

According to yet another aspect of the present disclosure, the operations of the above-mentioned method are stored on a machine-readable medium comprising instructions, which, when implemented by one or more processors, perform the recited operations. According to a further aspect of the present disclosure, a computer program product is provided which comprises instructions which, when the program is executed by a computer, cause the computer to carry out the method.

Other aspects will become apparent from the following description taken in conjunction with the following drawings.

### BRIEF DESCRIPTION OF THE DRAWINGS

Exemplary embodiments are illustrated by way of example and not limitation in the figures of the accompanying drawings, in which like references indicate similar elements.
FIG. 1 shows a block diagram illustrating conversion of a legacy application into a converted application, according to an example embodiment.
FIG. 2 is a flow chart of a method for code conversion, according to an example embodiment.
FIG. 3 is a block diagram illustrating phases of a method for code conversion, according to an example embodiment.
FIG. 4 is a schematic diagram illustrating conversion of an example pattern in a legacy language into an example resulting pattern in a target language, according to an example embodiment, when a rewrite rule is provided to recognize a high-level pattern.
FIG. 5 is a schematic diagram illustrating conversion of the same pattern in a legacy language into an example resulting pattern in a target language, according to an example embodiment, when no rewrite rule is provided to recognize the pattern.
FIG. 6 is a schematic diagram illustrating conversion of the same pattern in a legacy language into an example resulting pattern in a target language, according to an example embodiment, when a repeatable edit is provided to apply at this location.
FIG. 7 is a user interface that allows a user to view and modify a conversion plan, according to an example embodiment.
FIG. 8 is a user interface that displays a names and types pane, according to an example embodiment.
FIG. 9 is a user interface that displays a rules window, according to an example embodiment.
FIG. 10 is a high-level block diagram illustrating an example computer system, within which a set of instructions for causing the system to perform any one or more of the methodologies discussed herein can be executed.

### DETAILED DESCRIPTION

The following detailed description of embodiments includes references to the accompanying drawings, which form a part of the detailed description. Approaches described in this section are not prior art to the claims and are not admitted to be prior art by inclusion in this section. The drawings show illustrations in accordance with example embodiments. These example embodiments, which are also referred to herein as "examples," are described in enough detail to enable those skilled in the art to practice the present subject matter. The embodiments can be combined, other embodiments can be utilized, or structural, logical, and operational changes can be made without departing from the scope of what is claimed. The following detailed description is, therefore, not to be taken in a limiting sense, and the scope is defined by the appended claims.

Generally, the embodiments of this disclosure are concerned with systems and methods for code conversion. Specifically, the method of the present disclosure improves the conversion process supported by automated tools by enabling iterative and incremental improvement of the conversion result and possessing the unique combination of being both highly automated and highly interactive. Embodiments of the present disclosure allow manipulating the conversion process itself rather than the result of the conversion process. Specifically, users do not need to edit the converted source code. Instead, users can edit a description of the conversion process that produces the source code and then re-run the conversion at will.

The invention relies on a conversion plan that stores all the information required to repeat the code conversion as many times as necessary. From the user's point of view, the goal is therefore to incrementally improve the conversion plan in order to obtain an improved conversion result. The generated code can then be regenerated based on the information in the conversion plan. This eliminates the need to ever modify the generated code. Therefore, the embodiments described herein do not directly produce a converted application, but produce a conversion plan, which then can be applied to the legacy application to generate the converted application. By making incremental changes to the conversion plan, the converted application can be incrementally improved.

In contrast to model-based tools, the embodiments of this disclosure do not require editing the generated source code. Moreover, embodiments of this disclosure may overcome issues faced when using the model-based tools not by keeping track of the end result (the generated code and the protected regions therein), but rather by keeping track of the entire process that leads to the end result. When the process is reified as an object, it becomes possible to manipulate and modify the process to produce a different result, or to apply the same process to a different input.

In contrast to rule-based tools, the conversion plan contains all aspects of the conversion and can be interacted with through a graphical user interface. Moreover, some embodiments of the present disclosure may overcome issues faced when using the rule-based tools by making edits in the end result as a part of the process, such that the edits are reapplied whenever the process is run again.

Embodiments of this disclosure may provide a conversion process where a first result is obtained almost immediately and then incrementally improved and refined until considered satisfactory. The conversion process is highly automated because a generic initial conversion plan can be provided to perform the first iteration, basically taking care of all the non-creative but numerous and tedious transformations. The conversion process is highly interactive because all aspects of the initial conversion plan can be adapted to suit the precise requirements of the conversion project.

Referring now to the drawings, various embodiments are described in which like reference numerals represent like parts and assemblies throughout the several views. It should be noted that the reference to various embodiments does not limit the scope of the claims attached hereto. Additionally, any examples outlined in this specification are not intended to be limiting and merely set forth some of the many possible embodiments for the appended claims.

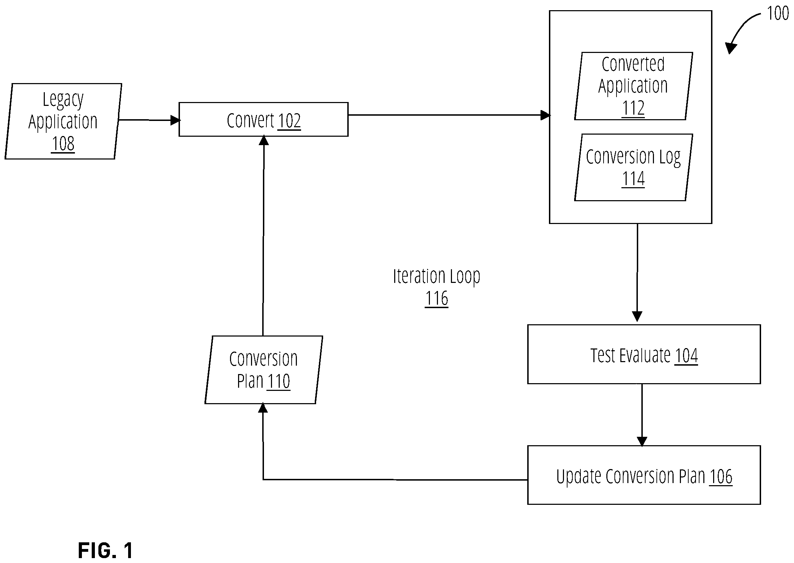

FIG. 1 shows a block diagram illustrating conversion 100 of a legacy application into a converted application, according to an example embodiment. In the first step of the conversion 100, a legacy application 108 (which is also referred to herein as an input code or an original code) is converted in block 102 into a converted application 112 (which is also referred to herein as an output code or a generated code). The conversion 100 is performed based on a conversion plan 110. The conversion plan 110 contains, among other things, information about programs, databases and data files, names, types, a conversion code, rewrite rules, repeatable edits, and templates. The conversion plan is stored in a set of files or alternatively in a database. The conversion code provides a set of initial Abstract Syntax Trees (ASTs) in the target language. The rewrite rules express how arbitrarily complex patterns of the original code are transformed into patterns of the converted code. The repeatable edits represent changes to the converted code that are stored as code transformations so that they can be replayed if necessary. The templates define the architecture of the converted application.

The conversion can be run as many times as desired. The generated code (i.e., the converted application 112) is a function of the input legacy code (i.e., the legacy application 108) and the conversion plan 110 without anything else. This makes it possible to replay the conversion if necessary. The conversion in block 102 also produces conversion logs 114 that keep track of issues encountered during the conversion (such as inconsistencies in the conversion plan, missing conversion rules, etc.) and provide statistics.

The generated code (i.e., the converted application 112), together with the conversion logs 114, is then tested and evaluated in block 104 through means such as automated and manual testing, performance assessment, readability, idiomaticity, respect of programming rules, adequacy to the target architecture, and so forth. The results of this testing and evaluation are then used to improve the conversion plan 110 interactively, after which the conversion in block 102 is run again. Each cycle of an iteration loop 116 attempts to improve the conversion quality with respect to the evaluation criteria. The method of the present disclosure consists of performing iteratively such cycles until a satisfactory result is obtained.

In practice, it is also common to address one aspect of the legacy application 108 at a time and leave the remaining aspects as 'todo' markers in the converted code. For instance, 'todo' markers can take the form of calls to an undefined todo() method. This has the benefit of making the generated code syntactically correct. By incrementally removing these 'todo' markers, the iteration loop 116 also increases the quantity of the generated code.

An initial version of the conversion plan 110 is used for the first conversion. It can be provided by a tool vendor for common conversion strategies, or by a tool used for specific projects.

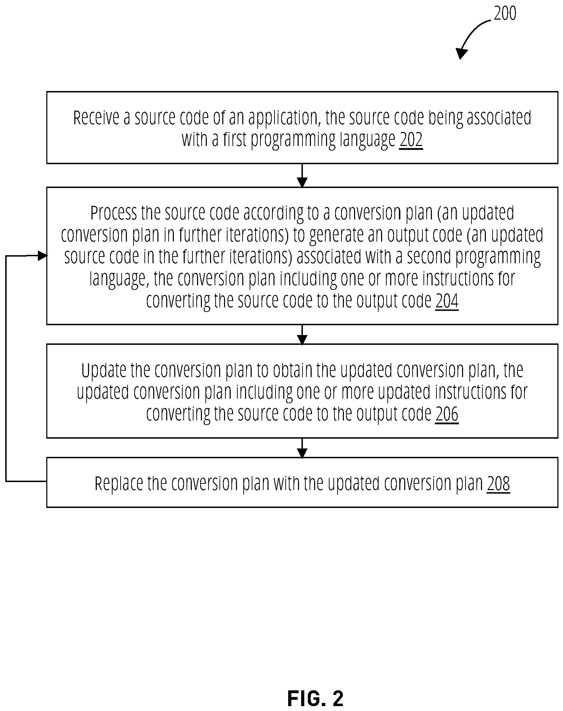

FIG. 2 is a flow chart of a method 200 for code conversion, according to an example embodiment. In some embodiments, the operations may be combined, performed in parallel, or performed in a different order. The method 200 may also include additional or fewer operations than those illustrated. The method 200 may be performed by processing logic that may comprise hardware (e.g., decision making logic, dedicated logic, programmable logic, and microcode), software (such as software run on a general-purpose computer system or a dedicated machine), or a combination of both.

The method 200 may commence in block 202, with receiving a source code of an application. The source code may be associated with a first programming language. In an example embodiment, the first programming language may be an obsolete programming language. In block 204, the method 200 may continue with processing the source code according to a conversion plan to generate an output code associated with a second programming language. The conversion plan may include one or more instructions for converting the source code to the output code. In an example embodiment, the second programming language may be a modern programming language and/or may differ from the first programming language. The processing of the source code may further include generating an AST corresponding to the source code.

In block 206, the method 200 may include updating the conversion plan to obtain an updated conversion plan. The updated conversion plan may include one or more updated instructions for converting the source code to the output code. In block 208, the method 200 may include replacing the conversion plan with the updated conversion plan. After block 208, the method 200 may return to block 204 and proceed with processing of the source code according to the updated conversion plan to generate an updated output code. The method 200 may further include repeating the operations in block 204, block 206, and block 208, thereby creating an iteration loop. In an example embodiment, after block 204, the method 200 may optionally include a step for performing an evaluation of whether the conversion result is considered satisfactory or further conversion of the source code to the output code and, hence, a further update of the conversion plan is necessary.

Besides legacy code migration, another application of the method 200 is to develop and maintain in parallel two versions of the same application written in different languages. In an example embodiment, the first programming language may be a programming language adapted to a first type of computer systems and the second programming language may be the programming language adapted to a second type of computer systems. The source code may be associated with a computer system of a first type and a first operating system and the output code may be associated with a computer system of a second type and a second operating system.

A common scenario is to maintain a Java version and a C# version of the same application. The Java version may be better supported on Linux and the C# version may be better supported on Windows. Clearly, it is more efficient to develop and maintain only one version. There exist Java to C# converters that one can use to write the Java version and automatically generate the C# version. These tools run in a batch mode and suffer from the same problems as rule-based conversion tools as described herein. Specifically, no user interaction is possible to tune the output of the conversion, and no iteration is possible since any changes made to the conversion result are overwritten if converting again.

In contrast, the method 200 makes it possible to interactively update and improve the conversion result and iterate the conversion process. The only difference between legacy code modernization and parallel program development is that, in the first case, the conversion process is expected to end eventually and the legacy code be discarded and replaced with the converted code, while in the second case, the conversion process is expected to run indefinitely in order to import changes into the converted version whenever the original version is modified.

According to the invention,
the updating of the conversion plan includes providing a user interface allowing a user to modify the conversion plan.

Prior to the updating the conversion plan, the previous conversion logs, the conversion plan, the source code, and the output code are analyzed to generate a report concerning the generation process and the output code. The report may be provided to the user.

The method 200 proceeds by repeating cycles consisting of two phases. In the first phase, a conversion result is obtained in block 204 by applying a conversion process to the input code (the legacy application 108). In the second phase, the conversion process is improved by performing an evaluation after block 206. Such cycles are repeated until the conversion result is considered satisfactory.

According to the invention,
the method 200 includes repeating the operation of updating the conversion plan and the operation of processing the source code according to the updated conversion plan to generate an updated output code for a finite number of iterations and, upon performing the iterations, replacing the source code with the output code. These operations may be performed, for example, to perform legacy software migration.

In a further example embodiment, the conversion loop may be intended to never stop, and the output code at all times may mirror the functionality of source code. This never stopping conversion loop may be used, for example, for maintaining in parallel the same program in different programming languages. In this embodiment, the method 200 may include receiving an indication that the source code has been modified. In response to the indication, the method 200 may proceed with repeating the conversion starting from the modified source code, according to either the same or the updated conversion plan, in order to enable functionality of the output code to be a same as a functionality of the source code.

For the very first iteration, the conversion is performed based on a default conversion plan that produces an initial result. It is basic in the sense that it tends to convert programming constructs line by line, with little emphasis on producing an idiomatic code.

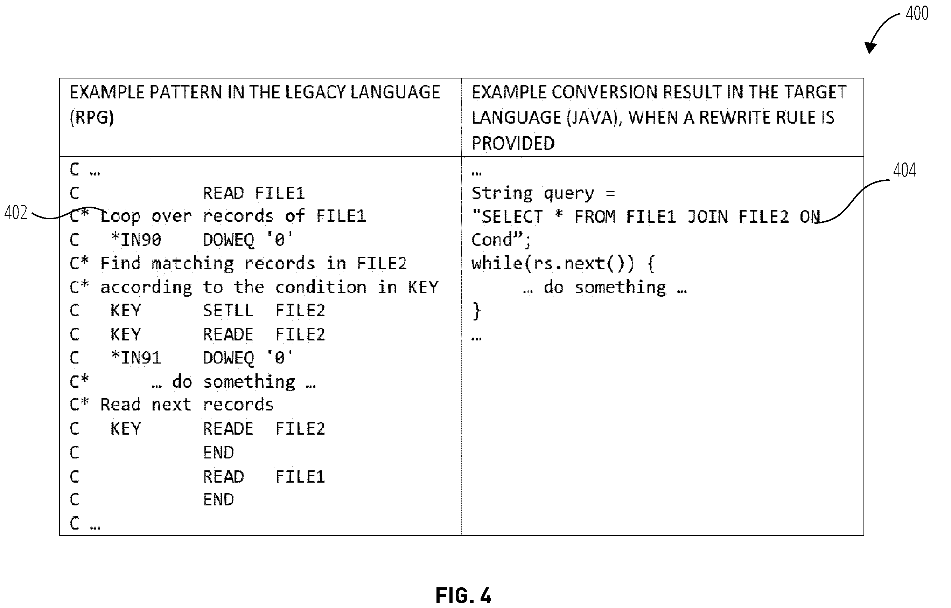

The result of the initial conversion typically is not desirable as a final result. More specifically, the result of the initial conversion typically contains programming idioms of the legacy application and preserves binary compatibility for data structures, which makes it difficult to read and to maintain for a developer of the target language. In this sense, the initial conversion is similar to compilation, as the output of a compiler can be run but hardly read and maintained directly. An example (see FIG. 4) is a loop iterating over records in a file in the legacy application that would be better expressed as a structured query language (SQL) SELECT query in the modernized application. Furthermore, the result of the initial conversion may not be very efficient on the target platform. Typically, modern software platforms provide higher-level abstractions that can be optimized much better than lower-level abstractions of legacy platforms. An SQL query can be much more efficient than direct record access since SQL databases are able to optimize queries. Finally, the initial conversion result also typically relies on a runtime library to support legacy programming concepts. This means adding external dependencies to the converted application that developers would rather avoid.

For all these aspects, the quality of the conversion result is to be improved in the subsequent cycles by incrementally improving the conversion plan.

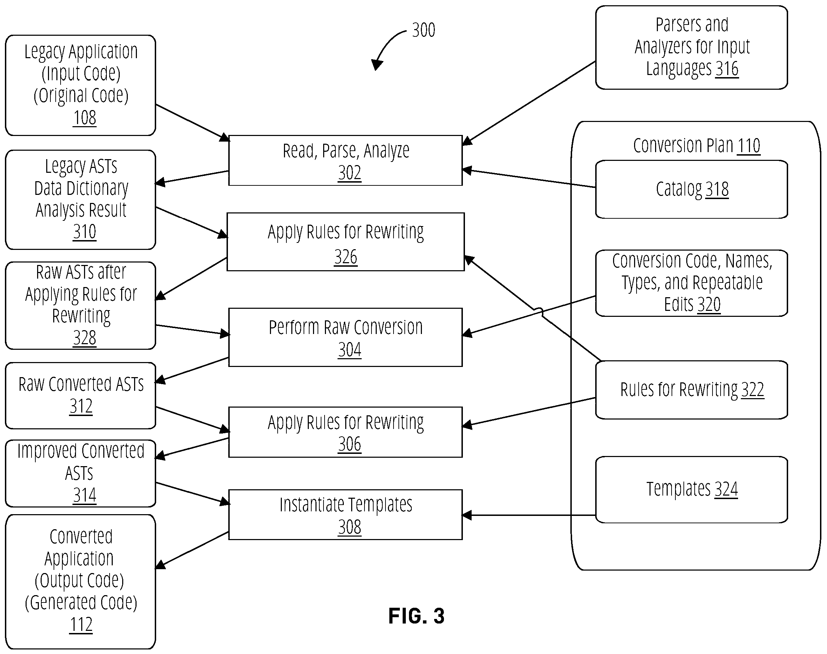

FIG. 3 is a block diagram illustrating phases 300 of a method for code conversion, according to an example embodiment. Specifically, the first phase is the conversion of a source code (also referred to as an input code or a legacy application 108) using a conversion plan 110. The expected result of the initial conversion phase is an output code (also referred to as a generated code or a converted application 112) that compiles and runs on the target architecture, together with tests to establish that the legacy application 108 and the converted application 112 have the same behavior where appropriate.

During the initial conversion phase, the legacy application 108 remains the only source of truth (the reference code). It can be maintained and updated, and the changes are ported to the converted application 112 by running the conversion again. The converted application 112 is not to be modified, as modifications might be overwritten when rerunning the conversion.

In general, an application is typically represented as a syntax tree (not as text) and the task is to convert a "legacy code" syntax tree to an "output code" syntax tree. An AST is the output of the parsing step shown in block 302. Typically, an AST node representing a construct in a legacy language is converted to an AST node or set of nodes representing an equivalent construct in the target language.

The legacy application 108 may include a set of software artifacts such as a program source code in various languages, scripts, data definitions, databases and data files, screen definitions, documentation, and so forth. The legacy application 108 may be read, parsed, and analyzed in block 302 in order to produce syntax trees for programs together with analysis results, such as name resolution, control flow graph, data flow graph, call graph, effects, and other various techniques that help understand programs. The reading, parsing, and analyzing in block 302 may be performed using parsers and analyzers 316 for input languages and using data stored in a catalog 318. Legacy ASTs, a data dictionary, and an analysis result are produced in block 310.

In block 326, rules for rewriting 322 (also referred herein to as rewrite rules) are applied to the legacy ASTs generated in block 310. The purpose of step in block 326 is to put the legacy code in a form that is best suited for conversion. The step in block 326 includes recognizing high-level patterns. As a result, raw ASTs 328 obtained after applying the rules for rewriting 322 are generated.

As used herein, the "raw conversion" is a conversion step that crosses the language barrier, e.g., raw COBOL to raw Java. Upon applying the rules for rewriting 322 in block 326, the raw conversion of the raw ASTs 328 is performed in block 304 by a conversion code attached to each kind of AST node found in the syntax trees obtained from the legacy application 108. When using an object-oriented programming style, this conversion code is typically provided as methods attached to each node class. The raw conversion is also performed by converting any of names and types and applying repeatable edits shown in block 320. Raw converted ASTs 312 are produced as a result of the raw conversion shown in block 304.

In block 306, rules for rewriting 322 are applied to the raw converted ASTs 312 generated in block 304. The purpose of the step in block 306 is to tidy up the raw converted ASTs by, for instance, applying styling rules or simplifying complex expressions. As a result, improved converted ASTs 314 are generated.

Templates 324 are instantiated; namely, their variables - or 'holes' - are replaced by the actual syntax trees from the previous step. In general, a template is an incomplete piece of code that includes holes. The holes must be filled with the actual code to provide an actual program. Specifically, in a simple example, "int m(int i) { return [...]; }" is a method declaration containing the hole [...]. If the hole is filled (the common term is "instantiate the template") with "i+1", the actual code "int m(int i) { return i+1; }" is obtained. The result of the instantiation is a set of software artifacts that form the converted application 112 running in the target environment. Such artifacts include programs, database and data file schemas, web pages, and so forth.

As part of template instantiation, it is also possible to generate data conversion programs that move data from the legacy system to the target system taking into account the transformations applied to the programs. As an example, converting programs reading record-based data to programs using SQL queries requires moving data from record-based files into an SQL database.

Thus, implementing the initial conversion consists in providing parsers and analyzers 316 for the input languages found in the legacy application. Furthermore, the initial conversion provides a conversion code for the kinds of nodes found in the syntax trees produced from the legacy application. The initial conversion further includes providing templates 324 that describe the architecture of the converted application 112.

Parsers, analyzers, and the conversion code can typically be shared and reused across all projects, as the language semantics is the same or very similar. Only constructs actually found in the legacy application need to be supported. Accordingly, there is no need to support the full language specifications (which can be of huge size).

The templates 324 are more project specific, as they implement architectural choices for the target converted application 112. They can be reused to the extent that the target technologies are similar (for instance, all J2EE applications may share similar templates).

Running the converted application 112 also typically requires a runtime library to provide support for legacy concepts that are not directly supported in the target environment.

The second phase of the method 200 is improving the current conversion plan 110. While existing rule-based tools end the conversion process without much room for further improvement, the conversion performed by the method 200 includes, iteratively: 1) evaluating the current state of the conversion result, based on test results or comments from application developers and architects; 2) based on this evaluation, improving the conversion plan; and 3) running the conversion again with the updated conversion plan. This iterative process is made possible because the conversion step relies on an explicit conversion plan that can be updated in an interactive manner.

As long as the conversion process is being performed, the original program and software artifacts remain the unique source of truth. Namely, the legacy code can still be maintained and updated during the conversion process, and such updates are taken into account in the next conversion cycle. The conversion process ends when the conversion result is considered satisfactory. At this point, the source of truth becomes the converted code, and it is not necessary to modify the legacy code anymore.

The conversion plan 110 may contain all the information required to run the conversion, namely a catalog 318, conversion code, names, types, and repeatable edits shown in block 320, rules for rewriting 322, and templates 324.

The catalog 318 is at the core of the conversion plan 110. The catalog 318 may list source files of the application. The source files may include the source code. The catalog 318 lists all the software artifacts involved in a conversion process. This includes a source code in various languages, data and screen description files, and various resources. When data migration is part of a conversion process, references to the data files themselves (such as databases) are also included in the catalog. Some software artifacts can be listed in the catalog 318 even if they are not going to be converted, for instance, if they are required for the understanding of the application.

The catalog 318 also keeps track of sources of truth. During the conversion process there may be at least two versions of an artifact: the legacy version and the converted version. It is crucial to keep track of which artifact is to be considered the reference and thus the one to be updated in case some maintenance is required. In an example embodiment of converting COBOL to Java, initially only the COBOL version exists, and it is the only source of truth. Then, when iterating the conversion loop, COBOL and Java exist side-by-side but the COBOL version remains the unique source of truth. Only the COBOL version is to be modified since the Java version might be regenerated (the method 200 allows program maintenance during the conversion process). Once the conversion of a specific legacy artifact is considered satisfactory and final (this typically requires many conversion cycles), the converted version is marked as the source of truth. The COBOL version is now considered out-of-date and cannot be used anymore and all changes are applied to the Java version going forward.

In practice, it is convenient to migrate a large application in parts rather than as a whole. The programs that need be maintained frequently can be converted first. Similarly, the conversion of the programs that can result in a performance bottleneck, or need to interact closely with the target system should be prioritized. The other programs can remain unconverted or converted incrementally when time and resources are available. When doing so, changing the source of truth is done on the program by program basis rather than once for the entire application. In an example embodiment, the conversion plan may keep track of a source of truth for each individual program associated with the source code.

As to names, the names in the generated code often differ from the corresponding names in the legacy code, due to technical limitations, naming conventions, and readability. For instance, the legacy code may contain the name 'CST#ADR.' This is typical of older legacy languages where names must be all capitals and no more than 6 or 8 letters, due to memory constraints. If the target language is Java, the symbol # is not allowed inside a Java identifier, so the Java code may instead use something like 'CSTADR.' However, using all capitals is against Java coding conventions, so the Java code may use 'cstAdr' instead.

If considering the actual meaning of this name, it is actually referring to a customer address. If the legacy code has been cleanly written, the meaning of the name is documented in a comment, but this is not always the case. Here the most appropriate Java name, using Java naming conventions, may be 'customerAddress.'

The method 200 handles names in a semi-automated way. First, the method 200 uses heuristics to automatically generate a name in the target language from the name in the legacy language and its documentation when available. In the example above, this may be 'cstAdr.' Then, the method 200 provides a user interface that makes it possible to interactively edit this generated name. The user may wish to enter 'customerAddress.' The edited name is then stored in the conversion plan and may be reused whenever the conversion is run again.

Accordingly, in some example embodiments, the conversion plan may include a rule for converting names of variables in the source code to further names adapted to the second programming language.

As to the types, for common target languages such as Java or C#, every variable needs be given a type. However, variables in a legacy code often do not have a type or have types that are wildly different from those in modern languages. As an example, the declaration in COBOL may be '01 INVDAT pic X(8).' This declares a variable named INVDAT using 8 bytes in memory. In the converted code in Java or C#, there are many options to choose the corresponding type from, including an integer value, a scaled decimal value, a date, a name, and so on. More specifically, the corresponding Java type might be int, java.lang.Decimal, java.lang. Date, String, char[], and so on.

Analysis of the legacy code can provide clues about the type in the converted code, by analyzing usage of the variable (by answering questions such as "is it used as a date?," "is it printed as a name?") and its documentation (here the name INVDAT suggests that it may be a date). However, this can hardly ever be fully automated, because the legacy code analysis is only partial and the result depends on the chosen implementation strategy.

The method 200 handles legacy types in a semi-automated way, similarly to names. First, the method 200 uses heuristics, including program analysis, to suggest one or more types for the generated code. The user can then interactively select one of them or add another one.

Types are taken into account when generating code. The choice of target types can have a huge impact on the shape of the converted code. For instance, the following statement adds 1 to the INVDAT variable: 'ADD 1 TO INVDAT.' If the target Java type of INVDAT is int, the converted code may be 'invoiceDate += 1; // integer addition.' However, if the selected Java type is java.lang.Date, the converted code may rather be 'invoiceDate.addDays(1); // java.util.Date API call.' Similarly, the method 200 can make sure that all types in the generated code are consistent even for complex expressions. All user-selected types are stored in the conversion plan and may be reused whenever the conversion is run again.

The conversion code does not necessarily contain a code to process all possible language constructs. The conversion is only required to support the language constructs actually found in a customer code, rather than all constructs from the language definition, which can be an order of magnitude larger.

The presence of unsupported constructs should not prevent performing the conversion. Unsupported constructs are typically handled by converting an AST in the source language(s) to an AST in an extension of the target language, where specific 'todo' AST nodes are added to identify unsupported constructs. All 'todo' nodes are listed in the conversion log and conversion statistics. This information helps prioritize changes to be done in the next iteration of the conversion process. The unsupported constructs may need to be converted during a later iteration of the conversion plan, either manually using repeatable edits or automatically by providing the corresponding conversion code.

In an example embodiment, the conversion plan may include one or more rewrite rules that match patterns in the source or output code and replace them with other patterns. In the source code, rewrite rules are typically used to identify high-level patterns (such as multiple embedded loops) and replace them with a higher-level abstraction. Rewrite rules are also useful to perform simplifications or optimizations in both the source code and the output code. The rewrite rules are shown as rules for rewriting 322 in FIG. 3. Specifically, the rules for rewriting 322 are of the form "1 → r if c" where l (the left-hand side) is a pattern (i.e., one of predetermined patterns) in the legacy language or in the target language, r (the right-hand side) is a pattern in the same language, and c is a condition that must be valid in order for the rule to apply. All user-defined rules for rewriting 322 are stored in the conversion plan 110 and may be reused whenever the conversion is run again.

Applying a rule of the rules for rewriting 322 consists in matching its left-hand side with an element in either the legacy code or the converted code, checking that the condition is valid, and replacing the matched element with its right-hand side. The rules for rewriting 322 are applied everywhere the left-hand side of the rule matches a pattern in the code and the rule condition evaluates to true. The rules for rewriting 322 are applied as long as possible. It may be the case that applying a rule changes the code in a way that another rule of the rules for rewriting 322 then applies, and so on repeatedly.

Another important aspect of the method 200 is the ability to edit the generated code in such a way that the edits are repeated when rerunning the conversion process. Editing is useful to fix one-of-a-kind issues that do not warrant designing a specific conversion code or rewrite rules. Without repeatable edits, changes to the generated code would be overwritten.

Repeatable edits are stored in the conversion plan in a manner quite similar to rewrite rules, with a left-hand side pattern and a right-hand side pattern. The difference is that rewrite rules are applied wherever their left-hand side matches some pattern in the code, while repeatable edits are applied only at a specific location.

FIG. 4 is a schematic diagram 400 illustrating conversion of an example pattern in a legacy language (Report Program Generator (RPG)) into an example resulting pattern in a target language (Java), according to an example embodiment, when a rewrite rule is provided to recognize a high-level pattern of two embedded loops that can be transformed into an SQL query. The rules for rewriting 322 can recognize complex patterns and generate a corresponding high-level construct in the generated code, thus raising the level of abstraction. The rules for rewriting 322 are the key to generating a maintainable and idiomatic code. As shown in FIG. 4, a typical pattern in the legacy RPG code 402 consists in two embedded loops reading matching records from two files and performing an operation on each couple of records. In the converted Java code 404, this pattern is better rendered as an SQL JOIN. The resulting Java code 404 is more concise, easier to read and to maintain, and more efficient (since high-level optimizations become possible).

The part written as '... do something ...' is a 'hole' in the pattern. On the left-hand side, it may be filled with the corresponding code fragment found in the legacy RPG code 402. On the right-hand side, it may be filled with the conversion of the fragment.

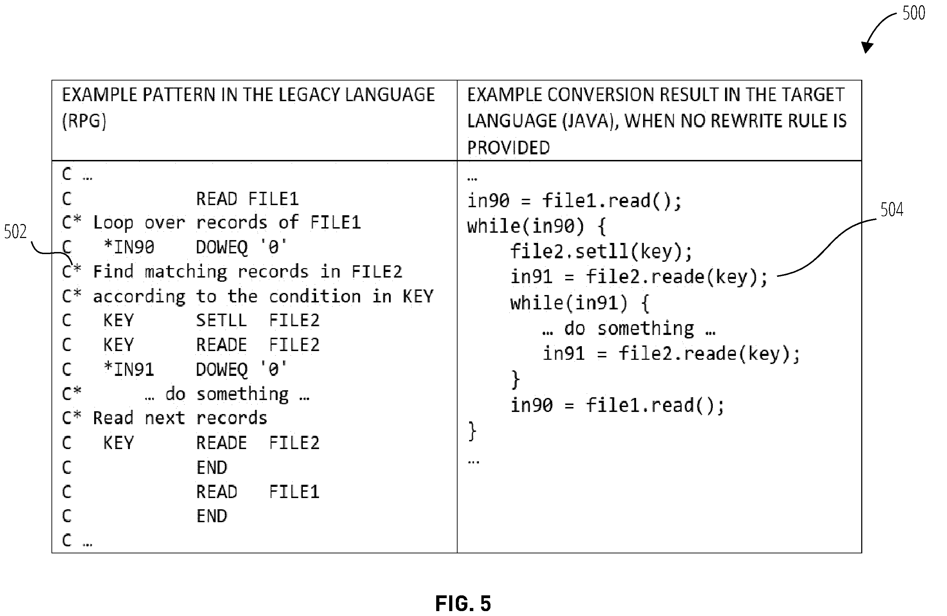

FIG. 5 is a schematic diagram 500 illustrating conversion of the same pattern in the legacy language (RPG) as shown in FIG. 4 into an example resulting pattern in the target language (Java), according to an example embodiment, when no rewrite rule is provided to recognize the pattern. As shown in FIG. 5, the conversion code may, by default, convert a loop in the RPG code 502 into a 'while' loop in a Java code 504; namely, the converted code has been converted from the source code statement by statement, without recognizing that the two embedded loops could have been transformed into an SQL query.

In general, manual edits may be a necessity but also a major and unsolved problem in the context of source code conversion. The method 200 may bring a totally new and different approach to the management of manual edits. Rather than letting users edit the generated code and somehow manage the problem of edits being overwritten when re-generating the code, the method 200 may include storing manual edits as repeatable edits in the conversion plan. These repeatable edits may then be reapplied whenever the conversion is run again.

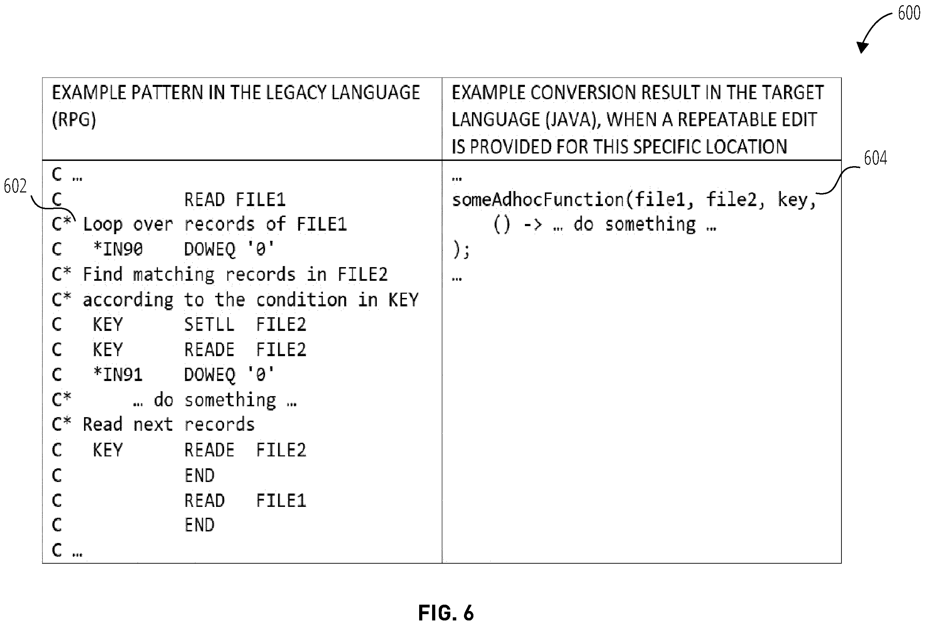

FIG. 6 is a schematic diagram 600 illustrating the application of a manual edit, according to an example embodiment. In an example embodiment, for the specific instance of an RPG loop shown in FIG. 5, the user may decide to provide a conversion that is different from the conversion automatically performed by the conversion tool. A rewrite rule cannot be introduced because it would apply to all RPG loops, while the user only desires to modify this specific loop. A repeatable edit can be introduced by selecting, via user interface, the relevant part of the code in the target language and replacing it with the expected converted code. As shown in FIG. 6, the RPG code 602 on the left is the code to be replaced by the repeatable edit, and the Java code 604 on the right is the replacement after applying the repeatable edit. The repeatable edit includes a 'hole' denoted here '... do something ...' This means that conversion applies as usual (with other rules in conversion plan) to the source code inside the 'hole.'

In summary, compared to rewrite rules that apply at all places where a pattern is found, repeatable edits apply only at a given location. The repeatable edits may associate a location in the source code with a pattern to be included in the output code. Such pattern may contain meta-variables and meta-functions. Compared to textual edits, repeatable edits are identified by a pattern and a location in the AST and can contain a number of 'holes' inside which conversion applies as usual.

With the approach used in the method 200, repeatable edits fix all the issues identified with textual edits. Specifically, there is no need to manage overwriting of edits when regenerating code, since edits are now part of the conversion plan and may be reapplied. Furthermore, edits can contain holes that stand for structural subparts that should be converted.

Edits can contain meta-functions. The meta-functions are a particular kind of hole where the content of the hole is provided by a user-defined function. This is useful, for instance, when the content of a hole is an identifier: it must be replaced by the converted identifier, not the original one. Meta-functions can refer to all the data available in the conversion plan, for instance, in order to obtain the correct replacement for a given identifier.

Furthermore, edits can be checked to be structurally sound because they apply to the AST and not to unstructured text. Edits can also be documented. Because the conversion process is aware of all the edits, it can offer features such as review and auditing of manual changes.

Repeatable edits may be stored in the conversion plan in a manner quite similar to storing rewrite rules, with a left-hand side pattern and a right-hand side pattern, with the addition of the location where the edit is to be performed.

The conversion plan may further include templates that define an architecture of the output code. The high-level structure of the converted application (the output code) may be quite different from the structure of the legacy application. For instance, an RPG application consists of a set of RPG source code, screens, and file definitions. The corresponding Java application consists of Java classes, Java interfaces and gluing code, HyperText Markup Language (HTML) pages, SQL table definitions, and so on. This difference in structure is handled by templates.

Templates provide the skeletons for all files to be generated during conversion. They consist of text containing 'holes' identified with special markers. Typically, templates provide the general architecture of a program (classes, methods, definitions) and 'holes' represent method bodies to be filled with code obtained from the conversion.

A typical conversion plan has many templates, organized following the desired directory structure of the target application. Templates may be associated with a Java program, a HTML page, a configuration file, and so on.

At the end of a conversion step, templates are instantiated (i.e., the holes are filled) with the appropriate program text, which results from the conversion. Templates are defined interactively by the user using a text editor or any other means to interact with program structure. All templates may be stored in the conversion plan and may be reused whenever the conversion is run again.

In an example embodiment, the conversion plan may include a further rule for converting variables of a first type to variables of a second type. The first type may be associated with the first programming language and the second type may be associated with the second programming language. The first type may be absent in the second programming language. In an example embodiment, the conversion plan may include a further rule for converting names of variables in the source code to further names adapted to the second programming language. Specifically, the conversion plan may specify, in the 'names' and 'types' sections, how data structures from a legacy application are mapped to data structures of a target converted application. This information is used to generate the appropriate converted application in order to mimic the same behavior as the original legacy application in an idiomatic way.

In addition, the same information can also be used to convert data from the legacy representation to the target representation. Here, the conversion plan may be used not only to generate the converted application, but also to generate a data conversion program that, when run, may be able to convert data. While application conversion and data conversion may be done independently, it is essential that they use the same mapping of data.

In an example embodiment, the conversion plan may include further rules for converting record-based data associated with the source code to a relational database associated with the output code. A typical scenario is to convert a legacy application manipulating record-based data to a target application using an SQL database, for example, when converting RPG to Java. The source code conversion may convert RPG code to Java code. The data conversion program, generated from the same conversion plan used by the source code conversion, may read record-based data from the legacy application and write it as relation data into the SQL database.

In an example embodiment, the output code may include a utility for converting data associated with the source code to data associated with the output code. Therefore, a data conversion utility may be generated as part of the conversion process.

In an example embodiment, given the conversion plan, the method for code conversion may further include the following operations. First, all legacy files, including programs, scripts, file descriptions, and screen descriptions may be provided to and stored into a source code control system. Then, edits in the legacy code may be optionally performed. Next, the legacy files may be read, lexically analyzed, and parsed, and syntax trees may be produced. The input language, namely the lexical analyzer and the parser to be used, can be specified by the user in terms of file extensions or directories. Next, syntax trees obtained from file and screen descriptions may be used to fill a global symbol table, namely a catalog of all names that can be referred to in programs, together with attributes such as data types. Examples of names are file names, record names, screen names, field names, and data type names. The global symbol table also keeps track of relationships, such as that a field belongs to a record belongs to a file. Next, the global symbol table may be completed with converted names and converted types provided by the user in the conversion plan, when they exist. The method may further proceed according to operations shown in FIG. 2.

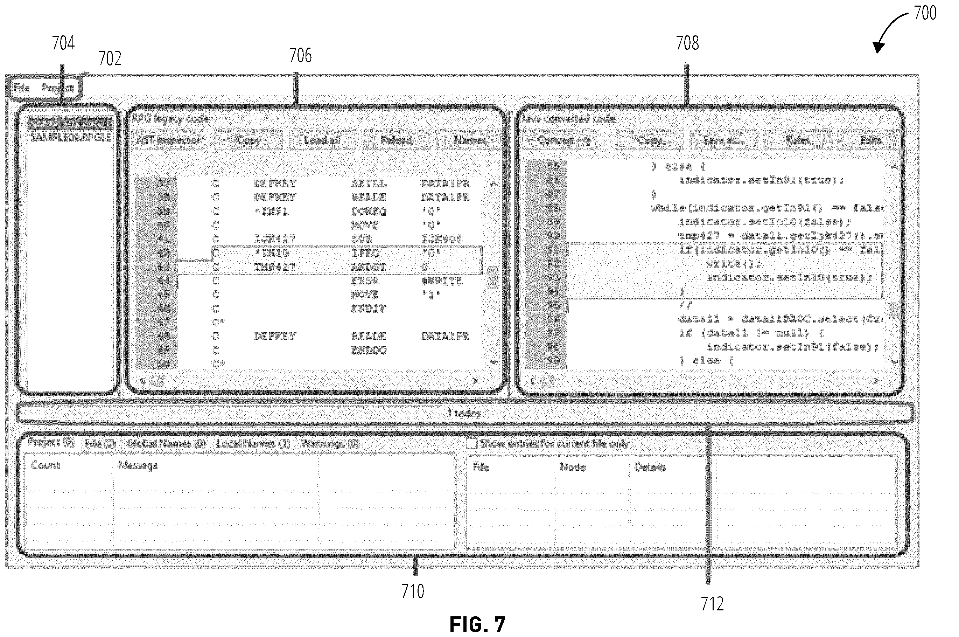

FIG. 7 is a user interface 700 that allows a user to view and modify the contents of a conversion plan, according to an example embodiment. The user interface 700 includes a menu 702 for selecting a file or a project, a catalog 704, a source code pane 706, an output code pane 708, a 'todo' pane 710, and a conversion log pane 712. The catalog 704 lists all input files belonging to the project. The source code pane 706 displays the contents of the currently selected legacy file. The output code pane 708 displays the contents of the corresponding converted code. The todo pane 710 provides information about the current selection. The conversion log pane 712 displays the contents of the log such as errors and 'todos.'

The source code pane 706 and the output code pane 708 display the source code and the output code side-by-side. In an example embodiment, the output code is Java source code edited in an Integrated Development Environment (IDE) and then compiled and provided as a Java library. The source code pane 706 and the output code pane 708 show how the codes are related: when selecting a code fragment on either side, the corresponding fragment on the other side is displayed (namely, the source or the result of the conversion). A contextual menu allows to make changes to the conversion plan by clicking directly on the corresponding element (for instance, specifying the converted name and converted type of a variable in the legacy code). Repeatable edits can be entered by selecting a code fragment corresponding to an AST and specifying its replacement in the edit windows.

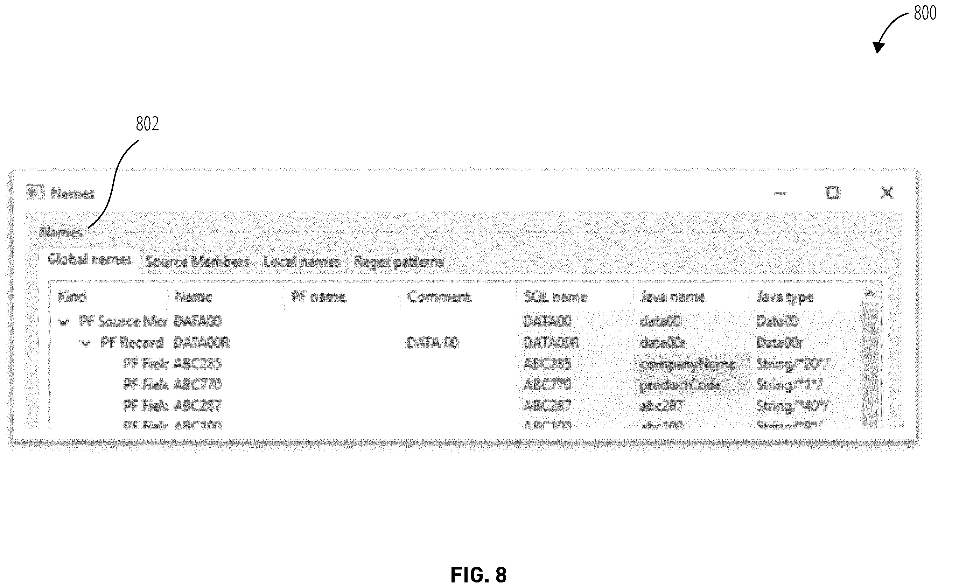

FIG. 8 is a user interface 800 that displays a names and types pane 802, according to an example embodiment. The names and types pane 802 displays, for each name found in the legacy code, the corresponding converted name and type (when relevant). Default names are provided and can be overridden by editing them in the names and types pane 802.

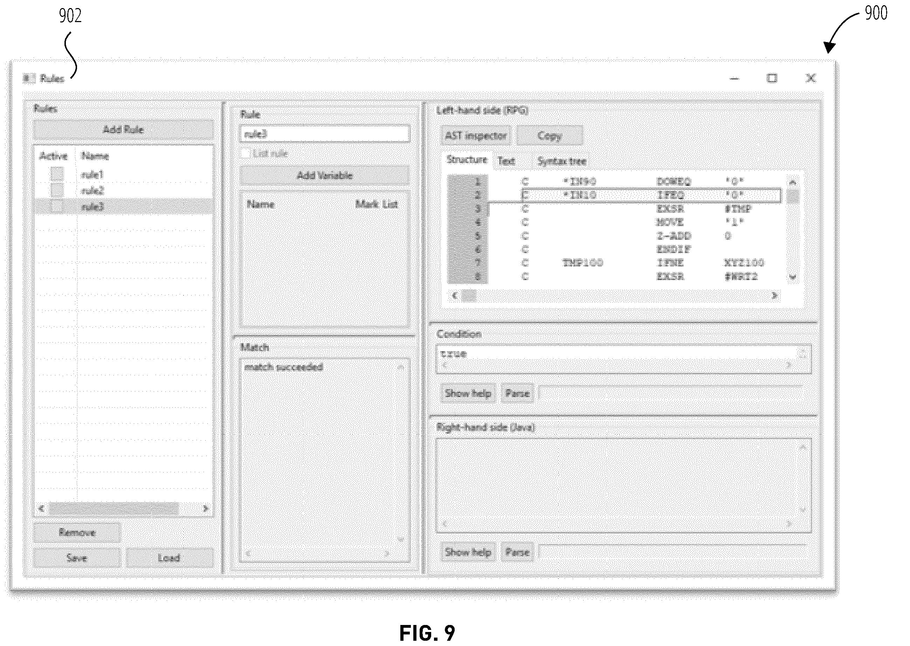

FIG. 9 is a user interface 900 that displays a rules window 902, according to an example embodiment. The rules window 902 contains all rewrite rules definitions. For each rule, the rules window 902 shows the left-hand pattern, the right-hand pattern, and the condition. The rules window 902 also shows whether a rule applies at the current code selection.

In some example embodiments, a user interface may display an edits window. The edits window is similar to the rules window, with the addition of information about the location where the edit is to be applied.

In an example embodiment, the templates are text files within a directory structure that provide the skeleton of the converted application. The templates can be created and edited using any text editor. File names of the templates can contain variables. File contents can contain code generating templates.

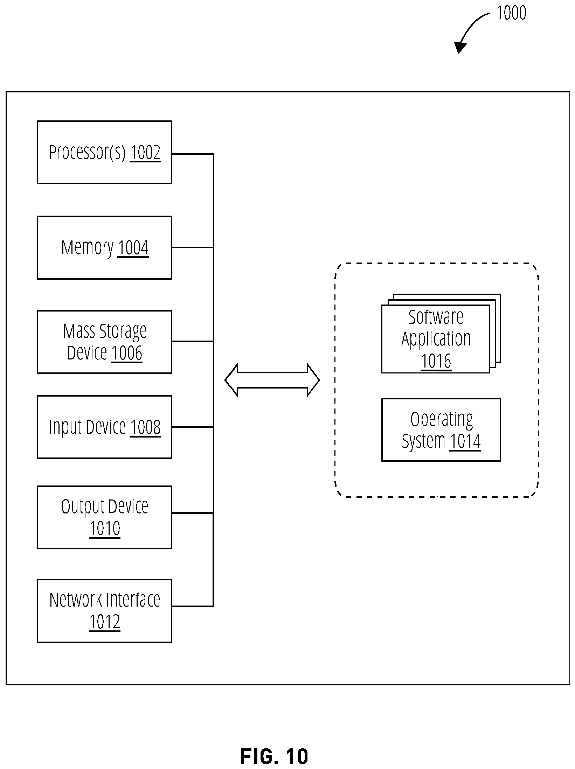

FIG. 10 is a high-level block diagram illustrating an example computer system 1000, within which a set of instructions for causing the machine to perform any one or more of the methodologies discussed herein can be executed. The computer system 1000 may include, refer to, or be an integral part of, one or more of a variety of types of devices, such as a general-purpose computer, a desktop computer, a laptop computer, a tablet computer, a netbook, a mobile phone, a smartphone, a personal digital computer, a smart television device, and a server, among others. In some embodiments, the computer system 1000 is an example of a system for code conversion and a computer apparatus for code conversion of the present disclosure. FIG. 10 illustrates just one example of the computer system 1000 and, in some embodiments, the computer system 1000 may have fewer elements/modules than shown in FIG. 10 or more elements/modules than shown in FIG. 10.

The computer system 1000 may include one or more processor(s) 1002, a memory 1004, one or more mass storage devices 1006, one or more input devices 1008, one or more output devices 1010, and a network interface 1012. The processor(s) 1002 are, in some examples, configured to implement functionality and/or process instructions for execution within the computer system 1000. For example, the processor(s) 1002 may process instructions stored in the memory 1004 and/or instructions stored on the mass storage devices 1006. Such instructions may include components of an operating system 1014 or software applications 1016. The computer system 1000 may also include one or more additional components not shown in FIG. 10, such as a body, a power supply, a power supply, a global positioning system (GPS) receiver, and so forth.

The memory 1004, according to one example, is configured to store information within the computer system 1000 during operation. The memory 1004, in some example embodiments, may refer to a non-transitory computer-readable storage medium or a computer-readable storage device. In some examples, the memory 1004 is a temporary memory, meaning that a primary purpose of the memory 1004 may not be long-term storage. The memory 1004 may also refer to a volatile memory, meaning that the memory 1004 does not maintain stored contents when the memory 1004 is not receiving power. Examples of volatile memories include random access memories (RAM), dynamic random access memories (DRAM), static random access memories (SRAM), and other forms of volatile memories known in the art. In some examples, the memory 1004 is used to store program instructions for execution by the processor(s) 1002. The memory 1004, in one example, is used by software (e.g., the operating system 1014 or the software applications 1016). Generally, the software applications 1016 refer to software applications suitable for implementing at least some operations of the methods for code conversion as described herein.

The mass storage devices 1006 may include one or more transitory or non-transitory computer-readable storage media and/or computer-readable storage devices. In some embodiments, the mass storage devices 1006 may be configured to store greater amounts of information than the memory 1004. The mass storage devices 1006 may further be configured for long-term storage of information. In some examples, the mass storage devices 1006 include non-volatile storage elements. Examples of such non-volatile storage elements include magnetic hard discs, optical discs, solid-state discs, flash memories, forms of electrically programmable memories (EPROM) or electrically erasable and programmable memories, and other forms of non-volatile memories known in the art.

The input devices 1008, in some examples, may be configured to receive input from a user through tactile, audio, video, or biometric channels. Examples of the input devices 1008 may include a keyboard, a keypad, a mouse, a trackball, a touchscreen, a touchpad, a microphone, one or more video cameras, image sensors, fingerprint sensors, or any other device capable of detecting an input from a user or other source, and relaying the input to the computer system 1000, or components thereof.

The output devices 1010, in some examples, may be configured to provide output to a user through visual or auditory channels. The output devices 1010 may include a video graphics adapter card, a liquid crystal display (LCD) monitor, a light emitting diode (LED) monitor, an organic LED monitor, a sound card, a speaker, a lighting device, a LED, a projector, or any other device capable of generating output that may be intelligible to a user. The output devices 1010 may also include a touchscreen, a presence-sensitive display, or other input/output capable displays known in the art.

The network interface 1012 of the computer system 1000, in some example embodiments, can be utilized to communicate with external devices via one or more data networks such as one or more wired, wireless, or optical networks including, for example, the Internet, intranet, LAN, WAN, cellular phone networks, Bluetooth radio, and an IEEE 902.11-based radio frequency network, Wi-Fi networks^{®}, among others. The network interface 1012 may be a network interface card, such as an Ethernet card, an optical transceiver, a radio frequency transceiver, or any other type of device that can send and receive information.

The operating system 1014 may control one or more functionalities of the computer system 1000 and/or components thereof. For example, the operating system 1014 may interact with the software applications 1016 and may facilitate one or more interactions between the software applications 1016 and components of the computer system 1000. As shown in FIG. 10, the operating system 1014 may interact with or be otherwise coupled to the software applications 1016 and components thereof. **In** some embodiments, the software applications 1016 may be included in the operating system 1014. In these and other examples, virtual modules, firmware, or software may be part of the software applications 1016.

Thus, systems and methods for code conversion have been described. Although embodiments have been described with reference to specific example embodiments, it will be evident that various modifications and changes can be made to these example embodiments without departing from the scope of the present Application. Accordingly, the specification and drawings are to be regarded in an illustrative rather than a restrictive sense.

## Claims

1. A computer-implemented method for code conversion, the method (200) comprising:
receiving (202) a source code of an application (108), the source code being associated with a first programming language;
processing (102, 204) the source code according to a conversion plan (110) to generate an output code (112) associated with a second programming language, wherein the conversion plan (110) includes one or more instructions for converting the source code to the output code and stores all information required to repeat the code conversion as many times as necessary;
(A) analyzing (104) the conversion logs, the conversion plan (110), the source code, and the output code (112) to generate a report concerning a process of the generation of the output code (112) and a result of the generation of the output code (112);
(B) providing the report to a user;
(C) updating (106, 206) the conversion plan (110) to obtain an updated conversion plan (106), the updated conversion plan (106) including one or more updated instructions for converting the source code to the output code, wherein updating (106, 206) includes providing a user interface (700) allowing a user to interactively modify the conversion plan (110);
(D) processing (102, 208) the source code according to the updated conversion plan (106) to generate an updated output code; and
repeating operations (A), (B), (C) and (D) at least one time.

2. The method of claim 1, wherein the conversion plan (110) includes one or more rewrite rules (322) and/or one or more repeatable edits.

3. The method of claim 1 or 2, wherein the conversion plan (110) includes a first rule or a first set of rules for converting names of variables in the source code to further names of variables adapted to the second programming language.

4. The method of claim 1, 2 or 3, wherein the conversion plan (110) includes a second rule or a second set of rules for converting variables of a first type to variables of a second type, the first type being associated with the first programming language and the second type being associated with the second programming language.

5. The method of any of the preceding claims, wherein the conversion plan (110) includes a third rule or a third set of rules for converting variables lacking a type to variables with a specified type, the specified type being associated with the second programming language.

6. The method of any of the preceding claims, wherein the conversion plan (110) includes a catalog of source files of the application (108), the source files including the source code.

7. The method of any of the preceding claims, wherein the conversion plan (110) keeps track of a source of truth for each individual program associated with the source code.

8. The method of any of the preceding claims, wherein the conversion plan (110) includes one or more templates defining an architecture of the output code (112).

9. The method of any of the preceding claims, wherein the output code (112) includes a utility for converting data associated with the source code to data associated with the output code (112).

10. The method of any of the preceding claims, further comprising:
repeating the operations (A), (B), (C), and (D) a pre-determined number of iterations; and
replacing the source code with the output code (112).

11. The method of any of the preceding claims, further comprising:
receiving an indication that the source code has been modified; and
in response to the indication, repeating the operations (A), (B), (C), and (D) to enable functionality of the output code (112) to be a same as a functionality of the source code.

12. The method of any of the preceding claims, wherein the processing (102, 208) the source code includes generating an abstract syntax tree corresponding to the source code.

13. A computer apparatus comprising at least one processor (1002) configured to perform the method of any of claims 1-12.

14. A computer-readable storage medium comprising instructions which, when executed by a computer (1000), cause the computer (1000) to carry out the method of any of claims 1-12.

## Patentansprüche

1. Computer-implementiertes Verfahren zur Konvertierung von Code, wobei das Verfahren (200) aufweist:
Empfangen (202) eines Quellcodes einer Anwendung (108), wobei der Quellcode einer ersten Programmiersprache zugeordnet ist;
Verarbeiten (102, 204) des Quellcodes gemäß einem Konvertierungsplan (110), um einen Ausgabecode (112) zu generieren, der einer zweiten Programmiersprache zugeordnet ist, wobei der Konvertierungsplan (110) eine oder mehrere Anweisungen zum Konvertieren des Quellcodes in den Ausgabecode umfasst, und alle Informationen speichert, die erforderlich sind, um die Konvertierung von Code so oft wie nötig zu wiederholen;
(A) Analysieren (104) der Konvertierungslogs, des Konvertierungsplans (110), des Quellcodes und des Ausgabecodes (112), um einen Bericht über einen Prozess der Generierung des Ausgabecodes (112) und ein Ergebnis der Generierung des Ausgabecodes (112) zu generieren;
(B) Bereitstellen des Berichts für einen Benutzer;
(C) Aktualisieren (106, 206) des Konvertierungsplans (110), um einen aktualisierten Konvertierungsplan (106) zu erhalten, wobei der aktualisierte Konvertierungsplan (106) eine oder mehrere aktualisierte Anweisungen zum Konvertieren des Quellcodes in den Ausgabecode umfasst, wobei das Aktualisieren (106, 206) das Bereitstellen einer Benutzerschnittstelle (700) umfasst, die es einem Benutzer ermöglicht, den Konvertierungsplan (110) interaktiv zu modifizieren;
(D) Verarbeiten (102, 208) des Quellcodes gemäß dem aktualisierten Konvertierungsplan (106), um einen aktualisierten Ausgabecode zu generieren; und
Wiederholen der Vorgänge (A), (B), (C) und (D) mindestens einmal.

2. Verfahren nach Anspruch 1, wobei der Konvertierungsplan (110) eine oder mehrere Umschreibungsregeln (322) und/oder eine oder mehrere wiederholbare Bearbeitungen umfasst.

3. Verfahren nach Anspruch 1 oder 2, wobei der Konvertierungsplan (110) eine erste Regel oder einen ersten Regelsatz zum Konvertieren von Namen von Variablen in dem Quellcode in weitere Namen von Variablen, die an die zweite Programmiersprache angepasst sind, umfasst.

4. Verfahren nach Anspruch 1, 2 oder 3, wobei der Konvertierungsplan (110) eine zweite Regel oder einen zweiten Regelsatz zum Konvertieren von Variablen eines ersten Typs in Variablen eines zweiten Typs umfasst, wobei der erste Typ der ersten Programmiersprache zugeordnet ist und der zweite Typ der zweiten Programmiersprache zugeordnet ist.

5. Verfahren nach einem der vorhergehenden Ansprüche, wobei der Konvertierungsplan (110) eine dritte Regel oder einen dritten Regelsatz zum Konvertieren von Variablen, denen ein Typ fehlt, in Variablen mit einem bestimmten Typ umfasst, wobei der bestimmte Typ der zweiten Programmiersprache zugeordnet ist.

6. Verfahren nach einem der vorhergehenden Ansprüche, wobei der Konvertierungsplan (110) einen Katalog von Quelldateien der Anwendung (108) umfasst, wobei die Quelldateien den Quellcode umfassen.

7. Verfahren nach einem der vorhergehenden Ansprüche, wobei der Konvertierungsplan (110) eine Source of Truth für jedes einzelne Programm, das dem Quellcode zugeordnet ist, nachverfolgt.

8. Verfahren nach einem der vorhergehenden Ansprüche, wobei der Konvertierungsplan (110) eine oder mehrere Vorlagen umfasst, die eine Architektur des Ausgabecodes (112) definieren.

9. Verfahren nach einem der vorhergehenden Ansprüche, wobei der Ausgabecode (112) ein Dienstprogramm zum Konvertieren von Daten, die dem Quellcode zugeordnet sind, in Daten, die dem Ausgabecode (112) zugeordnet sind, umfasst.

10. Verfahren nach einem der vorhergehenden Ansprüche, das ferner aufweist:
Wiederholen der Vorgänge (A), (B), (C) und (D) für eine vorbestimmte Anzahl von Iterationen; und
Ersetzen des Quellcodes durch den Ausgabecode (112).

11. Verfahren nach einem der vorhergehenden Ansprüche, das ferner aufweist:
Empfangen eines Hinweises, dass der Quellcode modifiziert wurde; und
als Reaktion auf den Hinweis, Wiederholen der Vorgänge (A), (B), (C) und (D), um die Funktionalität des Ausgabecodes (112) so zu aktivieren, dass sie mit der Funktionalität des Quellcodes übereinstimmt.

12. Verfahren nach einem der vorhergehenden Ansprüche, wobei das Verarbeiten (102, 208) des Quellcodes das Generieren eines abstrakten Syntaxbaums entsprechend dem Quellcode umfasst.

13. Computervorrichtung, die mindestens einen Prozessor (1002) aufweist, der so konfiguriert ist, dass er das Verfahren nach einem der Ansprüche 1-12 ausführt.

14. Computerlesbares Speichermedium, das Anweisungen aufweist, die, wenn sie von einem Computer (1000) ausgeführt werden, den Computer (1000) veranlassen, das Verfahren nach einem der Ansprüche 1-12 auszuführen.

## Revendications

1. Procédé mis en œuvre par ordinateur pour une conversion de code, le procédé (200) comprenant le fait de :
recevoir (202) un code source d'une application (108), le code source étant associé à un premier langage de programmation ;
traiter (102, 204) le code source en conformité avec un plan de conversion (110) afin de générer un code de sortie (112) qui est associé à un deuxième langage de programmation ; dans lequel le plan de conversion (110) englobe une ou plusieurs instructions destinées à convertir le code source en code de sortie et enregistre toutes les informations requises pour répéter la conversion de code autant de fois que nécessaire ;
(A) analyser (104) les fichiers journaux de conversion, le plan de conversion (110), le code source et le code de sortie (112) afin de générer un rapport qui concerne un processus de la génération du code de sortie (112) et un résultat de la génération du code de sortie (112) ;
(B) fournir le rapport à un utilisateur ;
(C) mettre à jour (106, 206) le plan de conversion (110) afin d'obtenir un plan de conversion (106) qui a été mis à jour, le plan de conversion mis à jour (106) englobant une ou plusieurs instructions mises à jour pour la conversion du code source en code de sortie ; dans lequel la mise à jour (106, 206) englobe le fait de procurer une interface utilisateur (700) qui permet à un utilisateur de modifier d'une manière interactive le plan de conversion (110) ;
(D) traiter (102, 208) le code source en conformité avec le plan de conversion mis à jour (106) afin de générer un code de sortie qui a été mis à jour ; et
répéter les opérations (A), (B), (C) et (D) au moins une fois.

2. Procédé selon la revendication 1, dans lequel le plan de conversion (110) englobe une ou plusieurs règles de réécriture (322) et/ou un ou plusieurs fichiers journaux reproductibles.

3. Procédé selon la revendication 1 ou 2, dans lequel le plan de conversion (110) englobe une première règle ou un premier jeu de règles pour la conversion de noms de variables dans le code source en autres noms de variables, qui sont adaptés au deuxième langage de programmation.

4. Procédé selon la revendication 1, 2 ou 3, dans lequel le plan de conversion (110) englobe une deuxième règle ou un deuxième jeu de règles pour la conversion de variables d'un premier type en variables d'un deuxième type, le premier type étant associé au premier langage de programmation et le deuxième type étant associé au deuxième langage de programmation.

5. Procédé selon l'une quelconque des revendications précédentes, dans lequel le plan de conversion (110) englobe une troisième règle ou un troisième jeu de règles pour la conversion de variables pour la conversion de variables dépourvues d'un type en variables présentant un type spécifié, le type spécifié étant associé au deuxième langage de programmation.

6. Procédé selon l'une quelconque des revendications précédentes, dans lequel le plan de conversion (110) englobe un catalogue de fichiers source de l'application (108), les fichiers sources englobant le code source.

7. Procédé selon l'une quelconque des revendications précédentes, dans lequel le plan de conversion (110) garde la trace d'une source de vérité pour chaque programme individuel associé au code source.

8. Procédé selon l'une quelconque des revendications précédentes, dans lequel le plan de conversion (110) englobe un ou plusieurs modèles qui définissent une architecture du code de sortie (112).

9. Procédé selon l'une quelconque des revendications précédentes, dans lequel le code de sortie (112) englobe un programme utilitaire pour convertir des données qui sont associées au code source en données qui sont associées au code de sortie (112).

10. Procédé selon l'une quelconque des revendications précédentes, qui comprend en outre le fait de :
répéter les opérations (A), (B), (C) et (D) un nombre prédéterminé d'itérations ; et
remplacer le code source par le code de sortie (112).

11. Procédé selon l'une quelconque des revendications précédentes, qui comprend en outre le fait de :
recevoir une indication du fait que le code source a été modifié ; et
en réponse à l'indication, répéter les opérations (A), (B), (C) et (D) pour faire en sorte que la fonctionnalité du code de sortie (112) soit identique à une fonctionnalité du code source.

12. Procédé selon l'une quelconque des revendications précédentes, dans lequel, le traitement (102, 208) du code source englobe le fait de générer un arbre de syntaxe abstraite qui correspond au code source.

13. Dispositif informatique qui comprend au moins un processeur (1002) configuré pour la mise en œuvre du procédé selon l'une quelconque des revendications 1 à 12.

14. Support d'enregistrement qui peut être lu par un ordinateur, comprenant des instructions qui, lorsqu'elles sont exécutées par un ordinateur (1000), font en sorte que l'ordinateur (1000) met en œuvre le procédé selon l'une quelconque des revendications 1 à 12.
